# EUROPÄISCHE PATENTSCHRIFT

(11) **EP 0 777 557 B1**
(45) Veröffentlichungstag und Bekanntmachung des Hinweises auf die Patenterteilung: **10.06.1998**
(21) Anmeldenummer: 95929099.0
(22) Anmeldetag: 10.08.1995
(51) Int. Cl.: B25G 3/24

(54) **FÜHRUNGSSTIEL FÜR GARTENGERÄTE**
GUIDING STEM FOR GARDENING TOOLS
TIGE DE GUIDAGE POUR INSTRUMENTS DE JARDINAGE

(30) Priorität: 30.08.1994 DE 4430786
(43) Veröffentlichungstag der Anmeldung: 11.06.1997
(73) Patentinhaber: WOLF-Geräte GmbH Vertriebsgesellschaft KG, D-57518 Betzdorf/Sieg (DE)
(72) Erfinder: WEID, Helmut, D-57520 Niederdreisbach (DE); ORTHEY, Gebhard, D-57583 Nauroth (DE)
(74) Vertreter: Koch, Günther, Dipl.-Ing.
(86) Internationale Anmeldenummer: EP9503174
(87) Internationale Veröffentlichungsnummer: WO9606713

(56) Entgegenhaltungen:
- EP-A- 0 033 072
- EP-A- 0 249 037
- EP-A- 0 515 909
- WO-A-88/00870
- WO-A-93/21751
- DE-A- 2 832 429
- DE-C- 130 113
- GB-A- 1 450 007
- US-A- 4 690 447
- Wolf-Geräte-Händlerkatalog 1989, Ausgabe April 1988, Seite 35

## Beschreibung

Die Erfindung bezieht sich auf einen Führungsstiel der im Oberbegriff des Patentanspruchs 1 angegebenen Gattung. Ein derartiger Führungsstiel ist bekannt aus dem Wolf-Geräte-Händlerkatalog 1989, Ausgabe April 1988, Seite 35. Bei diesem bekannten Führungsstiel ist als Klemmvorrichtung eine Klemmschraube vorgesehen, die von Hand angezogen werden muß. Das Lösen und Arretieren einer solchen Schraubklemmvorrichtung ist verhältnismäßig schwierig, und zwar einmal deshalb, weil häufig unnötig viele Umdrehungen beim Lösen der Schraubverbindung durchgeführt werden und beim Festklemmen die Schraube entsprechend oft gedreht werden muß. Es kann überdies vorkommen, daß der Handgriff verrutscht, wenn die Klemmschraube nicht genügend fest angezogen wurde, was eine Beschädigung des Gerätes nach sich ziehen kann, wenn der Griff im angehobenen Zustand des Gerätes verrutscht. Häufig ist auch ein Lösen der Klemmschraube für die Bedienungsperson nicht möglich, wenn zuvor ein Benutzer die Klemmschraube mit großem Kraftaufwand (oder mittels eines Werkzeugs) angezogen hat. Andererseits hat eine solche Klemmvorrichtung mit reibungsschlüssiger Festlegung des Handgriffs Vorteile gegenüber Führungsstielen mit formschlüssiger Festlegung, wie sie beispielsweise in der EP-A-05 15 909 beschrieben sind. Bei diesem bekannten Fadenschneider weist der Führungsstiel Rastlöcher auf, die über die Länge des Stiels und über seinen Umfang verteilt sind. In diese Rastlöcher ist ein aushebbarer Riegel unter Federkraft einschiebbar. Diese Ausbildung ergibt zwar einen festen Kalt des Griffes in den verschiedensten Stellungen, jedoch ist einerseits der Aufbau relativ kompliziert, und andererseits ist die Bedienung etwas umständlich, weil jeweils zum Einstellen der angehobene Riegel auf ein bestimmtes Rastloch ausgerichtet werden muß. Außerdem ist dem Laien nicht ohne weiteres erkennbar, wie er die Formschlußverbindung lösen, d.h. den Riegel ausheben kann.

Der Erfindung liegt daher die Aufgabe zugrunde, einen gattungsgemäßen Führungsstiel mit reibungsschlüssig festlegbarem Formschluß derart zu verbessern, daß der Handgriff in jeder beliebigen Lage ohne Kraftaufwand schnell und sicher festklemmbar und ebenso ohne Kraftaufwand schnell wieder lösbar ist.

Gelöst wird die gestellte Aufgabe durch die im Kennzeichnungsteil des Patentanspruchs 1 angegebenen Merkmale. Durch den Exzenterhebel kann eine hohe Kraftübersetzung erreicht werden, so daß mit einer relativ kleinen Stellkraft eine sichere Klemmwirkung erreicht werden kann. Dem Benutzer wird optisch erkennbar, ob der Griff am Stiel festgelegt ist oder nicht, weil der Exzenterhebel im gelösten Zustand vom Stiel absteht und in dieser Stellung offensichtlich eine Betätigung fordert, um den Griff festzulegen.

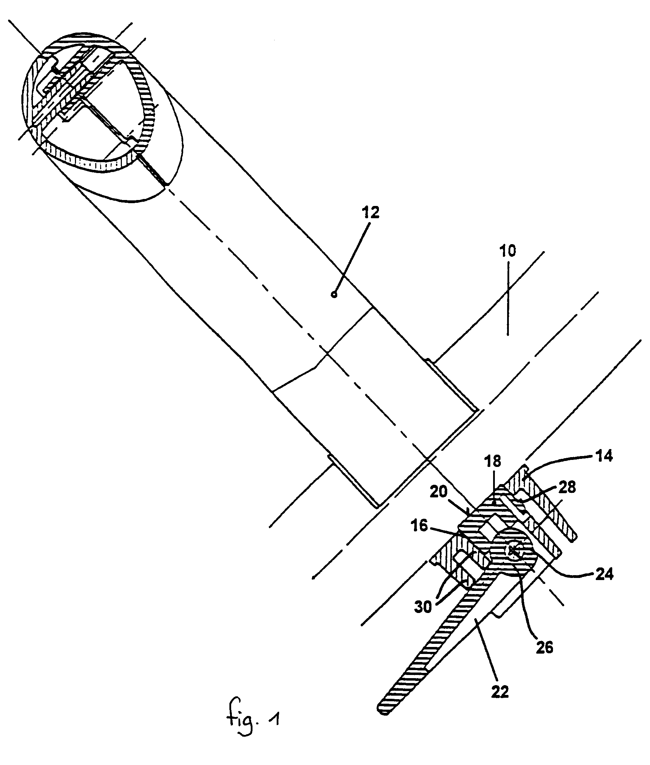

Es ist zwar bereits bekannt, Spannexzenter zur Erzeugung eines Reibungsschlusses zu benutzen. So zeigt die EP-A-0 033 072 einen Staubsauger, in dessen Gehäuse eine Bohrung ausgebildet ist, in die das Ende einer Führungsstange einsteckbar und über einen Exzenter festlegbar ist. Gemäß dem Ausführungsbeispiel gemäß Fig. 1 dieser Druckschrift wird ein Formschluß dadurch erreicht, daß ein Exzenter in eine Ringnut der Führungsstange eingreift, während gemäß dem Ausführungsbeispiel gemäß Fig. 2 eine Klemmverbindung vorgesehen ist, bei der der Exzenter auf eine federnde Zunge einwirkt, die in der Wand der Bohrung vorgesehen ist.

Es ist weiter durch die DE-C-130 113 eine Stielbefestigung für Besen, Schrubber o. dgl. bekannt, die eine Hülse, einen Haken und einen Exzenterhebel aufweist, wobei der durch die Hülse greifende, mit Zähnen versehene Exzenterhebel den Stiel fest in die Hülse zieht und gegen das Bürstenholz preßt.

Weitere Ausgestaltungen der Erfindung ergeben sich aus den abhängigen Patentansprüchen 2-5.

Nachstehend wird ein Ausführungsbeispiel der Erfindung anhand der Zeichnung beschrieben. Die einzige Figur der Zeichnung zeigt in einem Teilschnitt die erfindungsgemäß ausgebildete Klemmvorrichtung für den an einem Stiel festzulegenden Handgriff.

In der Zeichnung ist ein Abschnitt eines Gerätestiels 10 mit kreisförmigem Querschnitt dargestellt. Auf diesem Stiel 10 ist ein Handgriff 12 festklemmbar, der aus zwei Schalenhälften besteht, die, wie aus der Zeichnung ersichtlich, miteinander verrastet sind.

Der Handgriff 12 selbst ist als Bügel ausgebildet, der einseitig von dem Stielrohr vorsteht. Der Griff könnte jedoch auch als Handrad ausgebildet sein, daß den Stiel 10 konzentrisch umgibt.

Der Handgriff umgreift den Stiel 10 mit einer ringförmigen Manschette 14, deren Innendurchmesser etwas größer ist als der Außendurchmesser des Stiels 10, so daß der Griff mit der Manschette 14 längs des Stiels frei verschoben und um diesen Stiel herum geschwenkt werden kann.

Die Manschette 14 weist an der dem Griff 12 gegenüberliegenden Seite ein radiales Führungsloch 16 für ein Druckstück 18 auf, das in diesem Loch radial verschiebbar ist und das mit seiner Stirnseite gegen den Stiel 10 wirkt. Daher ist zweckmäßigerweise die Stirnfläche 20 entsprechend der Krümmung des Stiels teilzylindrisch gestaltet.

Ein Exzenterhebel 22 ist innerhalb der Manschette 14 um eine Drehachse 24 schwenkbar, die die Achse des Stieles 10 senkrecht kreuzt. Der Exzenter 26 des Exzenterhebels wirkt gegen das der Stirnfläche 20 abgewandte Ende des Druckstücks 18. Das Druckstück ist zweckmäßigerweise becherartig ausgebildet und der Exzenter 26 wirkt auf die abgerundeten Stirnkanten des Bechers. Das Druckstück 18 besteht aus elastischem Material und ist von innen in das Führungsloch 16 der Manschette 14 eingeschoben, wobei eine Sperrnase 28 ein Herausfallen verhindert, wenn der Handgriff von Stiel abgezogen ist.

Die Manschette 14 weist eine Ausnehmung auf, in der der Hebel 22 im Klemmzustand zu liegen kommt. Dieser Klemmzustand ist in der Zeichnung dargestellt. Hierbei liegt der Hebel den verkürzten Rippen 30 der Manschette an, die als Anschlag wirken, so daß der Exzenterhebel in Klemmstellung im wesentlichen parallel zum Stiel 10 und im Abstand zu diesem derart verläuft, daß der Hebel leicht mit zwei Fingern erfaßt werden kann.

Zum Lösen der Klemmverbindung wird der Exzenterhebel 22 im Gegenuhrzeigersinn um die Drehachse 2 verschwenkt, bis er zur Anlage an die Rippe 32 der Manschette 14 kommt. In dieser Freigabestellung steht der Exzenterhebel 22 im wesentlichen senkrecht zur Stielachse, so daß dem Benutzer sofort erkennbar wird, daß die Klemmvorrichtung gelöst ist.

Zur Verbesserung der Klemmwirkung kann die Manschette und/oder das Druckstück 18 mit einem Reibungsbelag versehen sein.

## Patentansprüche

1. Führungsstiel (10) für einen Fadenschneider mit Klemmvorrichtung für den längs des Stiels (10) verschiebbaren und um den Stiel drehbaren Handgriff (12) mit den folgenden Merkmalen:
- der Handgriff (12) weist eine ringförmige Manschette (14) auf, die den Stiel (10) mit Zwischenraum umgreift;
- mit der Manschette (14) ist der Handgriff (12) auf dem Stiel (10) verschiebbar und um die Stielachse schwenkbar;
- die Manschette ist mit der lösbaren Klemmvorrichtung zur reibungsschlüssigen Festlegung an jeder Stelle des Stiels (10) versehen;
dadurch gekennzeichnet, daß
- die Klemmvorrichtung einen durch einen Spannhebel (22) betätigbaren Exzenter (26) aufweist, der in der Manschette um eine die Stielachse im wesentlichen senkrecht kreuzende Achse drehbar gelagert ist und über ein Druckstück (18) auf den Stiel (10) zur reibungsschlüssigen Verbindung einwirkt, daß der Spannhebel (22) in Klemmstellung etwa parallel zum Stiel (10) und im Abstand zu diesem einem Anschlag (30) anliegt und daß der Spannhebel (22) in entsperrter Stellung etwa senkrecht zur Stielachse absteht und gegen einen weiteren Anschlag anliegt.

2. Führungsstiel nach Anspruch 1,
dadurch gekennzeichnet, daß das in einem radialen Führungsloch (16) geführte Druckstück (18) becherartig ausgebildet ist.

3. Führungsstiel nach den Ansprüchen 1 und 2,
dadurch gekennzeichnet, daß die Innenseite der Manschette (14) und/oder die dem Stiel (10) zugewandte Stirnseite (20) des Druckstückes (18), die der Krümmung des Stiels angepaßt ist, mit einem Reibungsbelag versehen ist.

4. Führungsstiel nach den Ansprüchen 1 bis 3,
dadurch gekennzeichnet, daß das Druckstück (18) eine Sperrnase (28) aufweist, die die Einschubbewegung des Druckstückes (18) (bei fehlendem Stiel) verhindert.

5. Führungsstiel nach einem der Ansprüche 1 bis 4,
dadurch gekennzeichnet, daß der Handgriff (12) bügelförmig ausgebildet ist.

## Claims

1. Guide helve (10) for a thread cutter with a clamping mechanism for the handle (12) adapted to be displaced along the helve (10) and rotated about the helve, having the following features:
- the handle (12) incorporates a ring-shaped collar (14) which encompasses the helve (10) with clearance;
- the handle (12) is adapted to be displaced along with the collar (14) on the helve (10) and to be swivelled about the helve axis;
- the collar is provided with the releasable clamping mechanism for frictional location at any point on the helve (10);
characterised in that
- the clamping mechanism has a cam (26) adapted to be actuated by a cocking lever (22), said cam (26) being mounted in the collar so as to be rotatable about an axis which substantially vertically intersects the helve axis and operating via a thrust member (18) on the helve (10) to produce a frictional connection, in that in the clamped position the cocking lever (22) bears roughly parallel to the helve (10) and spaced apart therefrom against a stop (30), and that in the release position the cocking lever (22) protrudes more or less perpendicularly from the helve axis and bears against a further stop.

2. Guide helve according to claim 1,
characterised in that the thrust member (18) which is set in a radial guide hole (16) is constructed in the manner of a cup.

3. Guide helve according to claims 1 and 2,
characterised in that the inside face of the collar (14) and/or the end face (20), nearest the helve (10), of the thrust member (18), which end face (20) matches the curvature of the helve, is provided with a friction coating.

4. Guide helve according to claims 1 to 3,
characterised in that the thrust member (18) incorporates a retaining lug (28) which prevents the pushing-in movement of the thrust member (18) (in the absence of the helve).

5. Guide helve according to any of claims 1 to 4,
characterised in that the handle (12) is a bow-shaped construction.

## Revendications

1. Manche (10) pour un coupe-herbe à fil avec une fixation par serrage pour la poignée (12) montée coulissante le long du manche (10) et tournante autour dudit manche, présentant les caractéristiques suivantes:
- la poignée (12) présente un manchon (14) annulaire qui entoure avec jeu le manche (10);
- avec le manchon (14) la poignée (12) peut coulisser sur le manche (10) et tourner autour de l'axe du manche;
- le manchon est pourvu du dispositif de blocage desserrable à des fins d'immobilisation par serrage en n'importe quel point du manche (10);
caractérisé
- par le fait que le dispositif de blocage comporte un excentrique (26) qui est actionné par un levier de serrage (22), est monté dans le manchon avec possibilité de rotation autour d'un axe coupant sensiblement à angle droit l'axe du manche et agit sur le manche (10) par l'intermédiaire d'une pièce de pression (18), par le fait que le levier de serrage (22), dans la position de blocage, est sensiblement parallèle au manche (10) et est en contact avec une butée (30,) à distance dudit manche, et par le fait que le levier de serrage (22) dans la position desserrée est sensiblement perpendiculaire à l'axe du manche et est en appui sur une butée supplémentaire.

2. Manche selon la revendication 1, caractérisé par le fait que la pièce de pression (18) guidée dans un trou de guidage (16) radial est conformée en godet.

3. Manche selon les revendications 1 et 2, caractérisé par le fait que la face intérieure du manchon (14) et/ou la face frontale (20) de la pièce de pression (18) tournée vers le manche (10), laquelle est adaptée à la courbure du manche (10), est pourvue d'une garniture de friction.

4. Manche selon une des revendications 1 à 3, caractérisé par le fait que la pièce de pression (18) présente un ergot de retenue (28) qui empêche le déplacement de la pièce de pression (18) (en l'absence de manche).

5. Manche selon une des revendications 1 à 4, caractérisé par le fait que la poignée (12) a une forme d'arceau.
